# EUROPÄISCHE PATENTSCHRIFT

(11) **EP 2 181 024 B1**
(45) Veröffentlichungstag und Bekanntmachung des Hinweises auf die Patenterteilung: **20.11.2013**
(21) Anmeldenummer: 08786121.7
(22) Anmeldetag: 14.07.2008
(51) Int. Cl.: B60S 1/38

(54) **WISCHBLATT**
WIPER BLADE
RACLETTE

(30) Priorität: 22.08.2007 DE 102007039563
(43) Veröffentlichungstag der Anmeldung: 05.05.2010
(73) Patentinhaber: Robert Bosch GmbH, 70442 Stuttgart (DE)
(72) Erfinder: VAN DE ROSTYNE, Kris, B-3360 Opvelp (BE); WYNEN, Paul, B-3910 Neerpelt (BE)
(86) Internationale Anmeldenummer: PCT/EP2008/059164
(87) Internationale Veröffentlichungsnummer: WO 2009/024410

(56) Entgegenhaltungen:
- DE-A1- 2 336 271
- DE-A1- 19 612 231
- US-A- 3 035 297

## Beschreibung

### Stand der Technik

Die Erfindung geht aus von einem Wischblatt nach der Gattung des unabhängigen Anspruchs. Mit der DE 2336271 A1 ist bereits ein derartiges Wischblatt bekannt geworden mit einem aus elastischem Kunststoff bestehenden Wischerbügel, der entsprechend der Krümmung einer Windschutzscheibe vorgeformt ist. Das Wischblatt ist in einer Nut des Wischerbügels befestigt oder aus einem Stück mit dem Wischerbügel hergestellt. Die Wischqualität dieses Wischblatts entspricht nicht immer den Erwartungen.

### Offenbarung der Erfindung

Das Wischblatt mit den Merkmalen des Hauptanspruchs hat den Vorteil einer definierten Geometrie, mit der die Wischlippe im Einsatz auf der Scheibe aufliegt. Diese Geometrie, die bei Wischblättern mit so genanntem Kippsteg durch das Nachziehen des umgeklappten Wischblattkeils, an dessen Unterseite die Wischlippe angeformt ist, erreicht wird, hat sich als wichtig für einen homogenen Wischvorgang herausgestellt. Damit werden insbesondere Ratter- und Quietschgeräusche vermieden und ein sauberes Wischbild erreicht. Andererseits hat sich die Konstruktion mit den Kippsteg als nachteilig im Umlegeverhalten in den Umkehrlagen der Wischbewegung herausgestellt. Durch die lateral sehr steife Ausbildung der Federschienen von sogenannten gelenkfreien Wischblättern legt sich der Wischkeil im Bereich des Kippstegs sehr schnell um und erzeugt dadurch ein störendes Umklappgeräusch.

Auf den Kippsteg kann verzichtet werden, wenn der Spitzenwinkel der Wischlippe zwischen 60 Grad und 150 Grad beträgt und die Aufstandsfläche einen Radius kleiner als 100 Mikrometer aufweist. Dadurch ist gewährleistet, dass die vom Wischblatt mit Kippsteg bekannte Schlepplage ausreichend gut nachgebildet ist und der Kontakt der Wischlippe zur Scheibe aufgrund des kleinen Radius nicht abbricht. Die über den Wischarm, das Tragelement, die Wischleiste und die Wischlippe eingeleitete Kraft erzeugt an der Aufstandsfläche einen Druck, der für die Dichtheit des Verbundes zwischen Scheibe und Wischblatt sorgt und damit für ein streifenfreies Wischbild verantwortlich ist. Durch die Kombination der Beschränkung des Radius in Verbindung mit dem definierten Spitzenwinkel liegen die für ein sauberes Wischbild notwendigen Verhältnisse vor.

Das Wischbild kann auch unter extremen Bedingungen in guter Qualität gehalten werden, wenn der Spitzenwinkel zwischen 75 Grad und 135 Grad beträgt, weil damit der Schlepplage noch besser entsprochen wird. Ein optimales Ergebnis erzielt man mit einem Spitzenwinkel von 90°, weil dann der durchschnittliche Winkel zwischen der Scheibenoberfläche und der Seitenwand der Wischlippe 45 Grad entspricht, was sich in der Praxis als bester Wert herausgestellt hat.

Hält man den Radius kleiner als 75 Mikrometer wird die Aufstandsfläche verkleinert, wodurch bei gleicher Krafteinleitung über den Wischarm der Druck zwischen Aufstandsfläche und Scheibenoberfläche und damit die Dichtheit erhöht wird, was die Qualität des Wischbilds steigert. Wird der Radius kleiner 50 Mikrometer gewählt, kann die durch den Wischarm eingeleitete Kraft verringert und das gesamte System entlastet werden.

Bei herkömmlichen Wischblattmaterialien führen die angegebenen geometrischen Werte zu einer optimierten Wischqualität, die weiter verbessert werden kann, wenn das Wischleistenmaterial einen Elastizitätsmodul von 10 Newton pro Quadratmillimeter nicht überschreitet. Dadurch hält sich die Verformung der Aufstandsfläche in vertretbaren Grenzen. Schafft man es den Elastizitätsmodul kleiner oder gleich 5 Newton pro Quadratmillimeter zu halten ergibt sich in Verbindung mit den beanspruchten geometrischen Werten eine für den Wischvorgang und die Dichtheit an der Aufstandsfläche optimale Verformung der Wischlippenspitze auf der Scheibe.

Durch die besondere Ausbildung des erfindungsgemäßen Wischblatt ohne Kippsteg und mit definierter Geometrie ist es möglich, den Spitzenwinkel dadurch herzustellen, dass eine der beiden Flächen, die den Spitzenwinkel einschließen, bereits fertig produziert wird, beispielsweise durch Extrusion, Spritzgießen oder Pressen. Die andere Fläche wird dagegen geschnitten, so dass ein definierter Winkel und ein definierter Radius entstehen.

### Zeichnungen

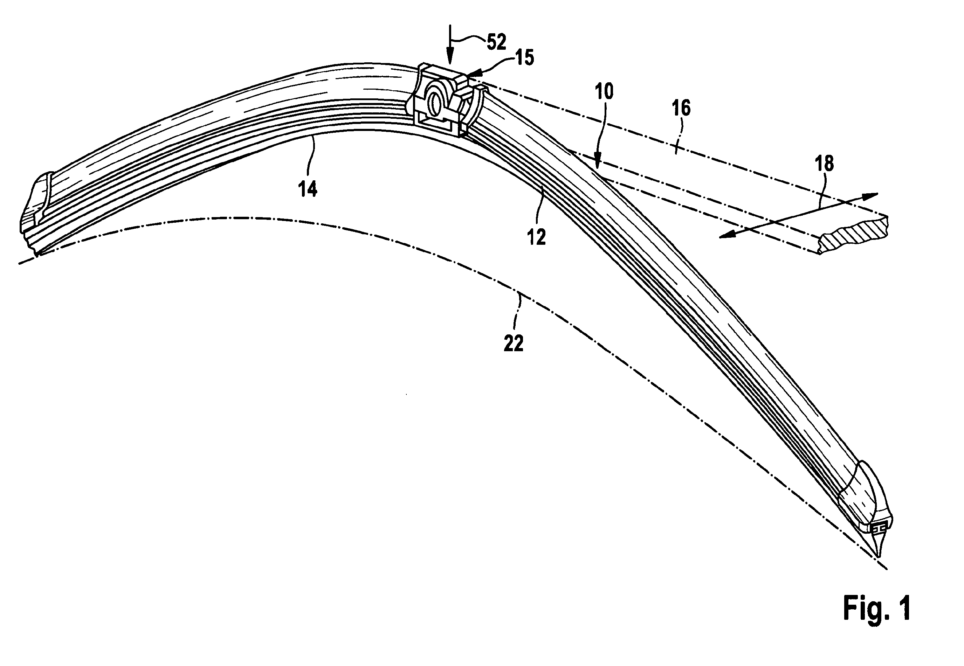

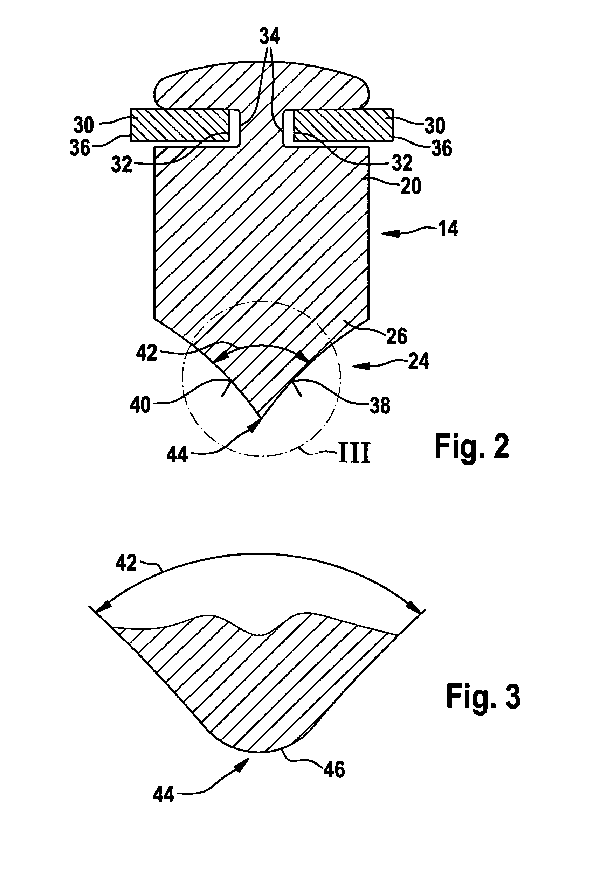

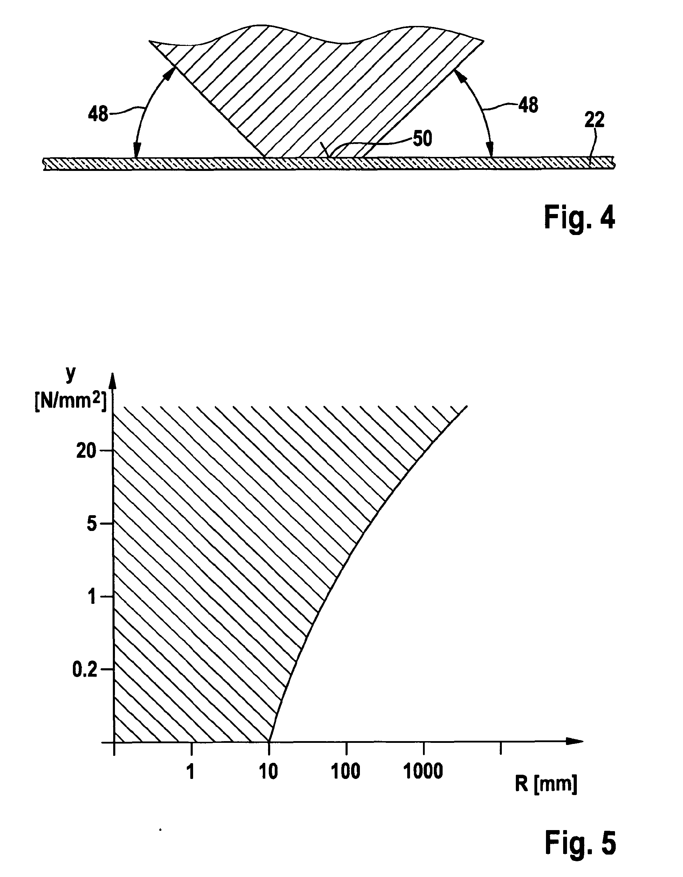

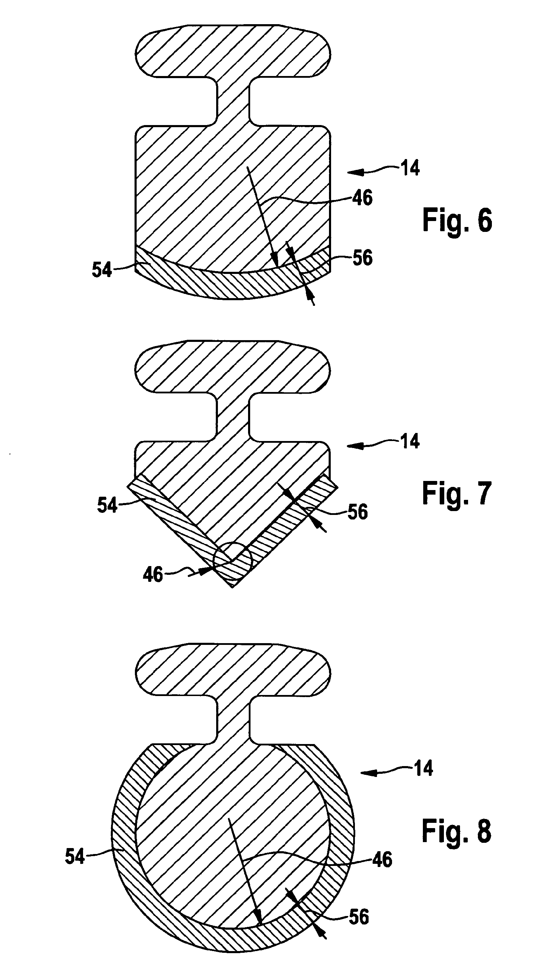

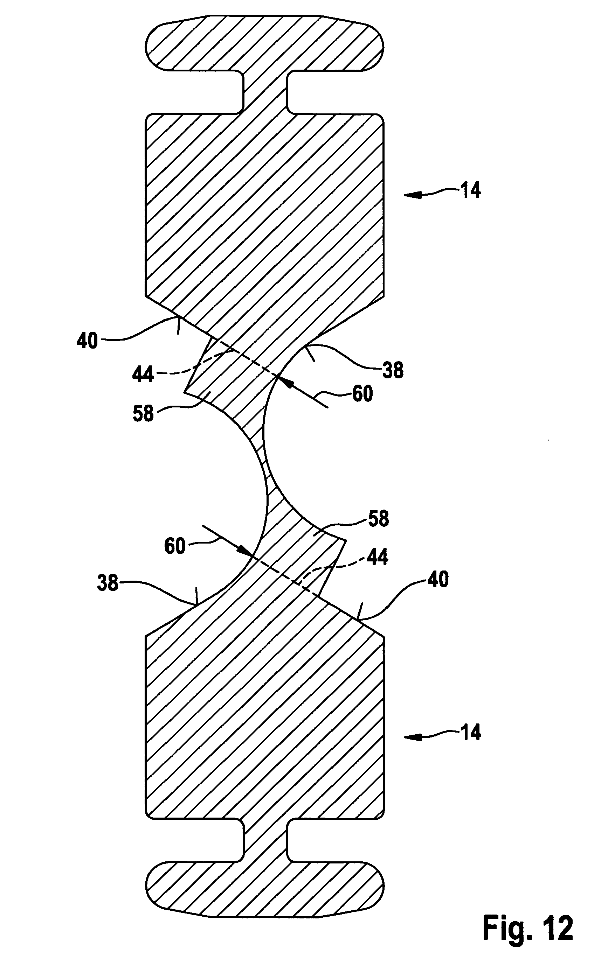

In den Zeichnungen 1-3 sind Ausführungsbeispiele des erfindungsgemäßen Wischblattes dargestellt und in der nachfolgenden Beschreibung näher erläutert. Es zeigen Fig. 1 ein gesamtes Wischblatt in Schrägdarstellung, Fig. 2 eine Wischleiste im Schnitt, Fig. 3 ein Detail der Wischlippenspitze nach III in Fig. 2, Fig. 4 die Wischlippenspitze nach Fig. 3 in Arbeitsposition, Fig. 5 ein Diagramm, das den Zusammenhang darstellte zwischen dem Radius der Aufstandsfläche und dem Elastizitätsmodul der Wischlippenspitze. Figuren 6 bis 11 zeigen weitere, nicht beanspruchte Ausführungsbeispiele der Wischleiste im Schnitt und Fig. 12 ein Beispiel für eine noch nicht geschnittene Wischleiste.

### Beschreibung

Ein Wischblatt 10 weist ein bandartig langgestrecktes, federelastisches Tragelement 12 in Form zweier mit einem Abstand parallel zueinander verlaufender Federschienen 30 auf. Diese sind mit ihren einander zugewandten, inneren Randstreifen 32 in Längsnuten 34 einer Kopfleiste 20 einer Wischleiste 14 eingesetzt, während ihre äußere Randstreifen 36 ein Stück weit aus den Längsnuten 34 seitlich vorstehen. Zu einer Fahrzeugscheibe 22 hin schließt sich an einen Wischleistenkopf 20 eine Wischlippe 26 an, die während einer Wischbewegung in Richtung eines Doppelpfeils 18 über die Fahrzeugscheibe 22 geleitet. Hierzu treibt ein Wischarm 16 das Wischblatt 10 über eine Anschlussvorrichtung an, deren wischblattseitiger Teil 15 mit dem Wischarm 16 gelenkig und lösbar verbunden werden kann, während er im mittleren Bereich des Wischblatt 10 fest auf dessen Tragelement 12 sitzt. Gleichzeitig belastet der Wischarm 16 das Wischblatt 10 in Richtung auf die Fahrzeugscheibe 22 zu mit einem Anpressdruck 24. Der Wischarm 16 und die Fahrzeugscheibe 22 sind durch strichpunktierte Linien angedeutet.

Die stärkste Krümmung der Fahrzeugscheibe 22 ist geringer als die Krümmung des mit seinen beiden Enden an der Fahrzeugscheibe 22 anliegenden, noch unbelasteten Wischblatts 10. Unter dem Anpressdruck 24 legt sich das Wischblatt 10 mit seiner Wischlippe 26 über seine gesamte Länge an die Fahrzeugscheibe 22 an. Dabei baut sich im aus Metall gefertigten, federelastischen Tragelemente 12 eine Spannung auf, welche für eine ordnungsgemäße Anlage der Wischleiste 14 bzw. der Wischlippe 26 über deren gesamte Länge an der Fahrzeugscheibe 22 sowie für eine gleichmäßige Verteilung des Anpressdrucks 24 sorgt.

In Fig. 2 ist die Wischleiste 14 im Schnitt dargestellt. Es ist zu erkennen, dass der Wischleistenkopf 20 einerseits an seinem in Fig. 2 oben dargestellten Ende die Federschienen 30 in Längsnuten 34 aufnimmt, andererseits an seinem unteren Ende in einen keilförmigen Fortsatz 24 übergeht, der dann als Wischlippe 26 ausgebildet ist. Der keilförmige Fortsatz 24 wird dabei durch eine erste Seitenwand 38 und eine zweite Seitenwand 40 begrenzt, die zueinander einen Spitzenwinkel 42 einschließen. Die Seitenwände 38, 40 münden in eine Aufstandsfläche 44.

Fig. 3 zeigt eine vergrößerte Darstellung der Wischlippenspitze mit ihrer Aufstandsfläche 44, die durch einen Radius 46 begrenzt ist.

Im Ausführungsbeispiel ist der Spitzenwinkel 42 mit 90 Grad und die Aufstandsfläche 44 mit einem Radius 46 von 50 Mikrometer gewählt. Diese Größen haben sich als optimale Parameter herausgestellt, weil dann unter anderem der Wischwinkel 48 zwischen der Fahrzeugscheibe 22 und den jeweiligen Seitenwänden 38, 40 eine Größe von 45 Grad und somit für den Wischvorgang den optimalen Wert einnimmt.

Es hat sich aber auch bewährt, wenn der Spitzenwinkel 42 zwischen 75 Grad und 135 Grad beträgt, wobei dann die Auswahl der Fahrzeugscheiben 22 geringer wird, für die das mit dieser Wischleiste 14 ausgestattete Wischblatt 10 verwendbar ist. Die Grenzen zu einem noch tolerablen Wischbild liegen bei Spitzenwinkeln zwischen 60 Grad und 150 Grad.

Die Aufstandsfläche 44 wird bei unbelastetem Wischblatt, also wenn die Wischlippenspitze nicht auf einer Fahrzeugscheibe 23 aufliegt, durch einen Radius 46 abgeschlossen, dessen optimaler Wert kleiner oder gleich 50 Mikrometer beträgt. Für die Herstellung eines solch kleinen Radius 46 sind exakte Verfahren notwendig, weshalb für weniger anspruchsvolle Verhältnisse beispielsweise Fahrzeuge mit geringerer Endgeschwindigkeit ein vergrößerter Radius 46 gewählt werden kann, der 75 Mikrometer nicht überschreitet. Ein Radius von größer 100 Mikrometer sollte vermieden werden, weil durch diesen größeren Radius auch eine größere effektive Aufstandsfläche 50 erzeugt wird. Es hat sich gezeigt, dass unter diesen Verhältnissen sowohl die Flächenpressung, die für die Dichtheit zwischen Wischgummi und Scheibe verantwortlich ist, geringer wird, als auch der Übergang von der effektive Aufstandsfläche 50 zu den Seitenwänden 38, 40 flacher ansteigt, was ein Aufschwimmen beziehungsweise Aquaplaning fördert.

Für diese geometrischen Verhältnisse ist es ergo notwendig, die Kraft 52 zu erhöhen, mit der der Wischarm 16 das Wischblatt 10 auf die Fahrzeugscheibe 22 drückt. Die Flächenpressung an der effektiven Aufstandsfläche 50 sollte größer als 1 MPa, vorzugsweise größer als 1,2 MPa sein.

Es hat sich ferner gezeigt, dass die Wischqualität vom Elastizitätsmodul Y des Wischgummimaterials abhängt und zumindest kleiner 10 Newton pro Quadratsmillimeter, vorzugsweise kleiner oder gleich 5 Newton pro Quadratmillimeter betragen soll. Dabei ist die Größe des Elastizitätsmodul nicht unbedingt unabhängig vom Radius. Für ein optimales Wischergebnis sollten der Elastizitätsmodul und der Radius im schraffierten Quadranten des in Fig. 5 dargestellten Diagramms liegen.

Anders zeigen sich die Verhältnisse, wenn die Wischleiste 14 zumindest im Bereich des Fortsatzes 24 oder der Aufstandsfläche 44 mit einer Schicht 54 überzogen ist. Der Radius 46 eines nicht beanspruchte Wischblatts kann dann extreme Werte bis zu 10 Millimeter annehmen. Bevorzugte Wischleistenformen sind in den Figuren 6 bis 11 dargestellt. Die Schichtdicke 56 kann je nach Radius 54 unterschiedliche Werte annehmen. Durch umfangreiche Untersuchungen hat sich herausgestellt, dass bei einem Radius 46 von 10 mm die Schichtdicke 56 nicht größer als 5 Mikrometer, bei einem Radius 46 von 5 Millimeter die Schichtdicke 56 nicht größer als 25 Mikrometer und bei einem Radius 46 von 1 Millimeter die Schichtdicke 56 nicht größer als 75 Mikrometer sein soll.

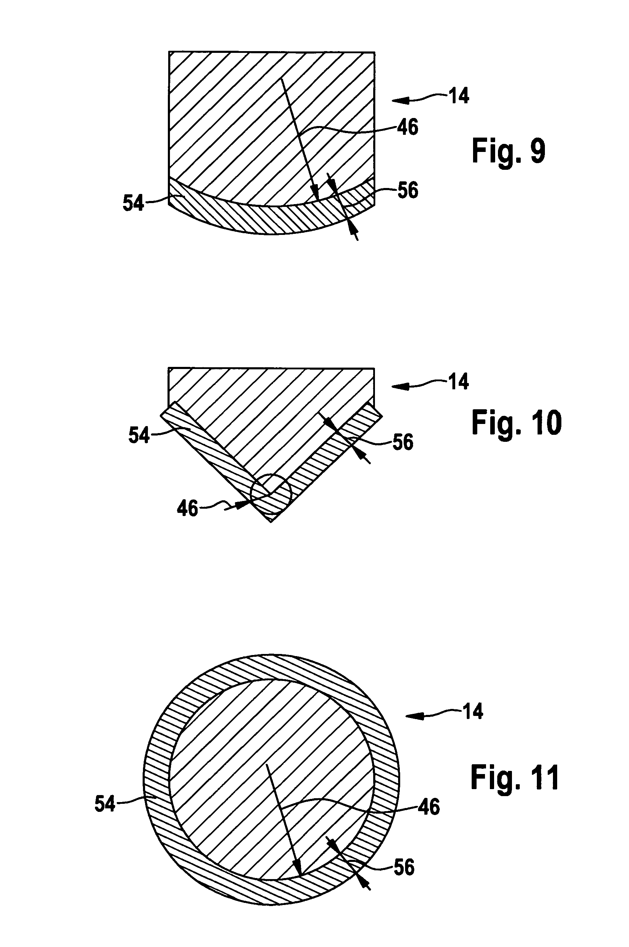

In den Figuren 9 bis 11 sind Wischleisten dargestellt, die keine Längsnuten 34 für Federschienen 30 aufweisen. Bei diesen Wischleisten 14 werden die Federschienen durch einen Bereich mit höherem Elastizitätsmodul Y ersetzt. Dieser Bereich kann anextudiert oder durch einen allmählichen Übergang von einem kleinen Elastizitätsmodul im Bereich der Wischlippe zu einem hohen Elastizitätsmodul im Bereich des Wischleistenkopf erzeugt sein.

Wie in Fig. 12 zu erkennen ist, werden zwei Wischleisten 14 gemeinsam hergestellt, die über die Volumenkörper 58 miteinander verbunden sind.

## Patentansprüche

1. Wischblatt (10) mit einer Wischleiste (14) aus elastischem Material, die einen Wischleistenkopf (20) und eine auf einer zu wischenden Scheibe (22) auflegbaren Wischlippe (26) aufweist, **dadurch gekennzeichnet, daß** die Wischlippe (26) als keilförmiger Fortsatz (24) des Wischleistenkopfs (20) ausgebildet ist mit einem Spitzenwinkel (42) zwischen 60 Grad und 150 Grad, der in eine Aufstandsfläche (44) mit einem Radius (46) kleiner als 100 Mikrometer mündet.

2. Wischblatt (10) nach Anspruch 1, **dadurch gekennzeichnet, dass** der Spitzenwinkel (42) zwischen 75 Grad und 135 Grad, vorzugsweise 90 Grad beträgt.

3. Wischblatt (10) nach einem der vorhergehenden Ansprüche, **dadurch gekennzeichnet, dass** der Radius (46) kleiner als 75 Mikrometer, vorzugsweise kleiner oder gleich 50 Mikrometer ist.

4. Wischblatt (10) nach einem der vorhergehenden Ansprüche, **dadurch gekennzeichnet, dass** das Wischleistenmaterial einen Elastizitätsmodul (Y) kleiner als 10 Newton pro Quadratmillimeter aufweist, vorzugsweise kleiner als oder gleich 5 Newton pro Quadratmillimeter.

5. Wischblatt (10) nach einem der vorhergehenden Ansprüche, **dadurch gekennzeichnet, dass** die Wischlippe (26) zwei miteinander einen Spitzenwinkel (42) einschließende Flächen (38, 40) aufweist, wobei die eine, erste Fläche (38) durch Extrusion, Spritzgießen oder Pressen hergestellt und die zweite Fläche (40) geschnitten ist.

## Claims

1. Wiper blade (10) with a wiper strip (14) made of elastic material and having a wiper strip head (20) and a wiper lip (26) which can be placed on a window (22) to be wiped, **characterized in that** the wiper lip (26) is designed as a wedged-shaped extension (24) of the wiper strip head (20) and has a point angle (42) of between 60 degrees and 150 degrees, said point angle leading into a contact surface (44) having a radius (46) of smaller than 100 micrometers.

2. Wiper blade (10) according to Claim 1, **characterized in that** the point angle (42) is between 75 degrees and 135 degrees, and is preferably 90 degrees.

3. Wiper blade (10) according to one of the preceding claims, **characterized in that** the radius (46) is small than 75 micrometers, and is preferably smaller than or equal to 50 micrometers.

4. Wiper blade (10) according to one of the preceding claims, **characterized in that** the wiper strip material has a modulus of elasticity (Y) of smaller than 10 Newtons per square millimeter, and is preferably smaller than or equal to 5 Newtons per square millimeter.

5. Wiper blade (10) according to one of the preceding claims, **characterized in that** the wiper lip (26) has two surfaces (38, 40) enclosing a point angle (42) between them, the one, first surface (38) being produced by extrusion, injection molding or pressing and the second surface (40) being cut.

## Revendications

1. Balai d'essuie-glace (10) comprenant une raclette de balai d'essuie-glace (14) en matériau élastique qui comprend une tête de raclette de balai d'essuie-glace (20) et une lèvre de balai d'essuie-glace (26) pouvant être posée sur une vitre (22) à essuyer, **caractérisé en ce que** la lèvre de balai d'essuie-glace (26) est réalisée sous forme de prolongement (24) en forme de coin de la tête de raclette de balai d'essuie-glace (20) présentant un angle de pointe (42) entre 60 degrés et 150 degrés, lequel angle de pointe aboutit à une surface d'appui (44) présentant un rayon (46) inférieur à 100 micromètres.

2. Balai d'essuie-glace (10) selon la revendication 1, **caractérisé en ce que** l'angle de pointe (42) vaut entre 75 degrés et 135 degrés, de préférence 90 degrés.

3. Balai d'essuie-glace (10) selon l'une quelconque des revendications précédentes, **caractérisé en ce que** le rayon (46) est inférieur à 75 micromètres, de préférence inférieur ou égal à 50 micromètres.

4. Balai d'essuie-glace (10) selon l'une quelconque des revendications précédentes, **caractérisé en ce que** le matériau de la raclette de balai d'essuie-glace présente un module d'élasticité (Y) inférieur à 10 Newton par millimètre carré, de préférence inférieur ou égal à 5 Newton par millimètre carré.

5. Balai d'essuie-glace (10) selon l'une quelconque des revendications précédentes, **caractérisé en ce que** la lèvre de balai d'essuie-glace (26) comprend deux surfaces (38, 40) formant l'une avec l'autre un angle de pointe (42), l'une des surfaces, à savoir la première surface (38), étant produite par extrusion, moulage par injection ou pressage et la deuxième surface (40) étant découpée.
